(19) Europäisches Patentamt
European Patent Office
Office européen des brevets

(11) **EP 3 351 880 A1**

(12) **EUROPÄISCHE PATENTANMELDUNG**

(43) Veröffentlichungstag:
25.07.2018 Patentblatt 2018/30

(21) Anmeldenummer: 17201422.7

(22) Anmeldetag: 13.11.2017

(51) Int Cl.:
*F25D 29/00* (2006.01)       *F25B 49/02* (2006.01)
*H02M 1/42* (2007.01)       *H02M 7/219* (2006.01)
*H02M 7/5387* (2007.01)

(84) Benannte Vertragsstaaten:
AL AT BE BG CH CY CZ DE DK EE ES FI FR GB
GR HR HU IE IS IT LI LT LU LV MC MK MT NL NO
PL PT RO RS SE SI SK SM TR
Benannte Erstreckungsstaaten:
BA ME
Benannte Validierungsstaaten:
MA MD

(30) Priorität: 14.11.2016 DE 102016013580
19.12.2016 DE 102016015139

(71) Anmelder: Liebherr-Hausgeräte Ochsenhausen
GmbH
88416 Ochsenhausen (DE)

(72) Erfinder: Polonskiy, Yevgen
88416 Ochsenhausen (DE)

(74) Vertreter: Herrmann, Uwe
Lorenz Seidler Gossel
Rechtsanwälte Patentanwälte
Partnerschaft mbB
Widenmayerstraße 23
80538 München (DE)

(54) **KÜHL- UND/ODER GEFRIERGERÄT**

(57) Die Erfindung betrifft ein Kühl- und/oder Gefriergerät umfassend einen Motor, einen Kompressor und eine zugehörige Kompressorsteuerung, wobei die Kompressorsteuerung durch einen Inverter gebildet ist.

**Beschreibung**

Die Erfindung betrifft ein Kühl- und/oder Gefriergerät, welches zur Steuerung des Kompressors einen Inverter aufweist.

Nichtlineare Verbraucher, typischerweise Gleichrichter mit nachfolgender Glättung, weisen bei sinusförmiger Wechselspannungsversorgung phasenverschobene und nicht-sinusförmige Eingangsströme auf. Diese setzen sich aus einer Summe höherfrequenter Anteile zusammen, die in den Stromversorgungsnetzen und anderen elektrischen Geräten Störungen verursachen können.

In Drehstromnetzen können bei ungenügender Filterung der höherfrequenten Anteile (= Oberschwingungen) unter Umständen unzulässig hohe Strombelastungen auf dem Neutralleiter auftreten, da sich Oberschwingungen addieren können und sich nicht gegenseitig aufheben.

Die typischerweise nicht-sinusförmige Stromentnahme hat eine Vielzahl von nachteiligen Auswirkungen. Zum einen sorgt der hohe Oberwellengehalt in Trafostationen für eine gesteigerte Verlustleistung, die von Kraftwerken erzeugt werden muss. Zum anderen bewirkt eine solche Stromentnahme die bereits vorstehend aufgeführte stärkere Beaufschlagung des Nullleiters, da sich die Strangströme im Dreiphasensystem nicht mehr größtenteils kompensieren lassen.

In Anbetracht dieser Probleme ist der Gesetzgeber aktiv geworden und fordert einen gewissen Leistungsfaktor, der einen Wert für die sinusförmige Entnahme von Strom, entsprechend der sinusförmigen Spannung, darstellt. Grundsätzlich fordert die für Haushaltsgeräte geltende Norm, dass alle Geräte ab einer Leistungsaufnahme von 75 W bestimmte Grenzwerte für Stromoberschwingungen einzuhalten haben. Die aktualisierte Normgebung IEC 61000-3-2, Class D verschärft den zu erreichenden Leistungsfaktor, sodass für Haushaltsgeräte die Thematik PFC (englisch: power factor correction, deutsch: Leistungsfaktorkorrektur) relevant geworden ist. Dabei gilt es die neuen Entwicklungen möglichst kostengünstig umzusetzen.

Auch im Bereich von Kühl- und/oder Gefriergeräten ist demnach die Leistungsfaktorkorrektur (PFC) in ihrer Bedeutung gestiegen.

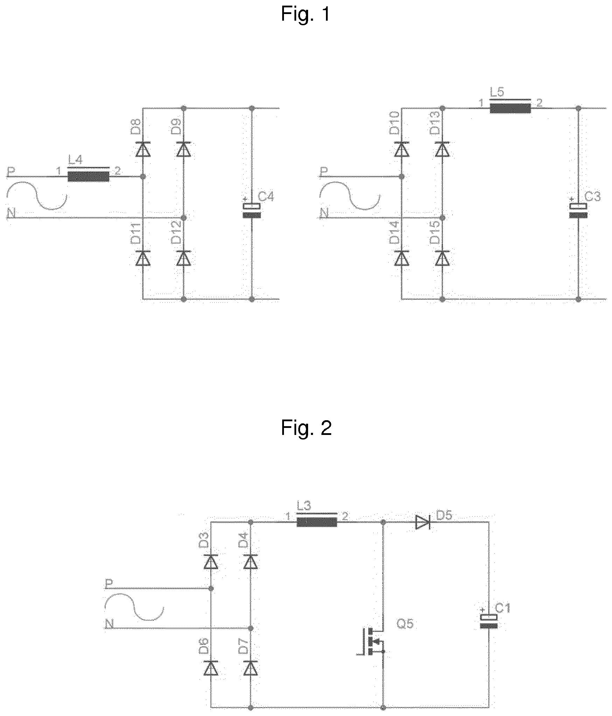

Aus dem Industriebereich sind grundsätzlich zwei klassische Ansätze bekannt, die in den Figuren 1 und 2 dargestellt sind. Zum einen ist dies ein passives Leistungsfaktorkorrekturfilter mit einer Vorschaltdrossel (Fig. 1) und ein aktives Leistungsfaktorkorrekturfilter mit einem Hochsetzsteller (Fig. 2).

Im Bereich von Kühl- und/oder Gefriergeräten sind aus dem Stand der Technik passive Leistungsfaktorkorrekturfilter bekannt, die jedoch relativ unflexibel bei einem Anpassen an eine jeweilige Last bzw. Norm sind. Auch hinsichtlich umzusetzender Verbesserungen oder der Implementierung von Weiterentwicklungen bezüglich des Leistungsfaktorkorrekturfilters erweisen sich passive Lösungen als nachteilhaft.

Es ist die Aufgabe der vorliegenden Erfindung, ein Kühl- und/oder Gefriergerät vorzusehen, das die vorstehend aufgeführten Nachteile überwindet.

Diese Aufgabe wird durch ein Kühl- und/oder Gefriergerät mit den Merkmalen des Anspruchs 1 gelöst. Danach ist vorgesehen, dass das Kühl- und/oder Gefriergerät einen Motor, einen Kompressor und eine zugehörige Kompressorsteuerung aufweist, wobei die Kompressorsteuerung einen Inverter enthält oder durch den Inverter gebildet wird.

Der Inverter des erfindungsgemäßen Kühl- und/oder Gefriergerätes bzw. die nachfolgend beschriebenen vorteilhaften Aspekte des verbauten Inverters können ohne weiteres auch bei anderen elektrischen Haushaltsgeräten zum Einsatz kommen, insbesondere zur dortigen Steuerung etwaiger Komponenten wie elektrische Antriebe.

Nach einer bevorzugten Ausgestaltung der Erfindung weist der Inverter ein aktives Leistungsfaktorkorrekturfilter auf, das vorzugsweise mit Gegentaktspulen versehen ist.

Nach einer weiteren Ausführung der Erfindung verfügt das aktive Leistungsfaktorkorrekturfilter über eine eigene und/oder eine integrierte Ansteuerung.

Dabei kann vorgesehen sein, dass das aktive Leistungsfaktorkorrekturfilter über eine steuerbare Vollbrücke verfügt.

Ferner kann vorgesehen sein, dass der Inverter ein brückenfreies Leistungsfaktorkorrekturfilter oder ein halbbrückenfreies Leistungsfaktorkorrekturfilter ist, das vorzugsweise mit einer Inverter-Endstufe versehen ist.

Nach einer weiterern bevorzugten Ausgestaltung der Erfindung werden in dem Inverter für Transistoren desselben Typs, insbesondere für die Transistoren des Leistungsfaktorkorrekturfilters und/oder der Inverter-Endstufe baugleiche Transistoren verwendet. Dies reduziert die Diversität der Bauteile und vermindert Kosten.

Vorzugsweise ist zum Steigern des Wirkungsgrads der Gleichrichtung eine Vollbrücke vorgesehen. Abzuwägen sind hierbei die zusätzlichen Kosten für Treiber und Transistoren, die mit dem Vorsehen der Vollbrücke anfallen.

Nach einer bevorzugten Ausführung der Erfindung sind die Drosseln des Leistungsfaktorkorrekturfilters im Gegentakt gekoppelt, um eine Steigerung der Induktivität zu erzielen. Dadurch lässt sich eine 4-fache Steigerung der Induktivität erzielen, denn es gilt:

$$L_{Gesamt} = L1 + L2 + 2\sqrt{L1 \cdot L2} = 4L, \text{ wobei } L1 = L2 = L.$$

Dabei kann vorgesehen sein, dass die Drosseln AC- oder DC-seitig angebracht sind.

Zudem kann vorgesehen sein, dass die Drossel des Leistungsfaktorkorrekturfilters den Ladestrom des Zwischenkreises des Leistungsfaktorkorrekturfilters begrenzt.

Vorzugsweise weist der Leistungsfaktorkorrekturfilter einen Entstörkondensator, insbesondere einen X-Kondensator auf.

Dabei kann vorgesehen sein, dass der Entstörkondensator so in den Leistungsfaktorkorrekturfilter angeordnet ist, das ein Entladen des Kondensators ohne Rückgriff auf spezielle ICs oder eine hochohmige Eingangsbeschaltung erfolgen kann.

Nach einer bevorzugten Ausführung der Erfindung stellt der Entstörkondensator eine kapazitive Blindlast dar, die durch das aktive Leistungsfaktorkorrekturfilter kompensierbar ist.

Nach einer weiteren Ausführungsform der vorliegenden Erfindung ist das Leistungsfaktorkorrekturfilter dazu ausgelegt, einen Betrieb des Kompressors sowohl bei einem 110 V-Netz als auch bei einem 220-V-Netz zu ermöglichen. Durch die prinzipiell bedingte Hochsetzstellerfunktion des Leistungsfaktorkorrekturfilters wird bei einer geeigneten Auslegung ein Betrieb an sowohl einem 110-Volt als auch einem 220-V-Netz ohne Kompressortausch möglich.

Vorzugsweise ist vorgesehen, dass die Versorgung des Inverters und einer Geräteelektronik des Kühl- und/oder Gefriergeräts über das Leistungsfaktorkorrekturfilter erfolgt. Dies senkt die Kosten und macht zeitgleich das gesamte Gerät und nicht nur den Inverter EMV-konform.

Gemäß einer weiteren Ausführung der Erfindung ist die Funktionalität eines passiven Leistungsfaktorkorrekturfilters durch Ausbleiben der Ansteuerung des aktiven Leistungsfaktorkorrekturfilters erzeugbar. Insbesondere bei geringer Last kann dadurch eine Ansteuerung ausbleiben, so dass die Topologie automatisch in ein passives Leistungsfaktorkorrekturfilter transformiert wird.

Von der Erfindung ist ebenfalls ein passives PFC umfasst, das im Gegentakt gekoppelte Drosseln aufweist. Die Drosseln sind AC- oder DC-seitig angeordnet.

Üblicherweise sind etwaige Messmittel der Messung der Zwischenkreisspannung eines Inverters vorgesehen. Üblicherweise wird hierzu ein Spannungsteiler verbaut, die direkt mit den Anschlüssen des Zwischenkreises verschaltet ist. Aufgrund der ohmschen Widerstände kommt es hier stets zu gewissen Verlusten. Gemäß bevorzugter Ausgestaltung der Erfindung wird daher vorgeschlagen, dass zwischen den Messmitteln und dem Zwischenkreis keine dauerhafte elektrische Verbindung besteht, wodurch sich die auftretende Verlustleistung reduzieren lässt. Besonders bevorzugt ist es, wenn bereits vorgesehene Messmittel des Inverters, beispielsweise solche für die Messung der Phasenspannungen des Kompressormotors, bevorzugt zur Nulldurchgangserkennung bei blockkommutierten Motoren, ebenfalls für die Messung der Zwischenkreisspannung genutzt werden. Diese Messmittel, im einfachsten Fall Spannungsteiler, stehen über ein oder mehrere Schaltelemente der Inverterendstufe, insbesondere MOSFETs, mit dem Zwischenkreis in Verbindung. Bei geschlossenem Schalter kann somit die Zwischenkreisspannung am entsprechenden Messmittel bzw. Spannungsteiler abgegriffen werden. Diese indirekte Messung vermeidet Verluste durch den sonst üblichen gesonderten Spannungsteiler des Standes der Technik und führt zu einem geringeren Energieverbrauch des Inverters.

Gemäß einem weiteren vorteilhaften Aspekt der Erfindung kann vorgesehen sein, dass die Schaltfrequenz der Leistungsendstufe des Inverters, insbesondere die PWM-Frequenz, variabel einstellbar ist, wobei die Frequenz idealerweise in Abhängigkeit wenigstens eines Parameters einstellbar sein kann. Mögliche Parameter mit Einfluss auf die eingestellte Schaltfrequenz können die aktuelle Kompressordrehzahl und/oder momentane Rotorlage des Kompressors sein. Durch diese Möglichkeit kann bei Bedarf die Schaltfrequenz reduziert werden, was insbesondere bei sensorlos geregelten blockkommutierten Motoren, wo die Phasenansteuerung in Zeitslots eingeteilt werden kann, in denen eine höhere oder niedrigere Schaltfrequenz realisierbar ist, sinnvoll sein kann. Eine Reduktion der Schaltfrequenz. mindert die Schaltverluste und erhöht die Lebensdauer der Transistoren, während ein regelmäßiges oder unregelmäßiges Umschalten eine Spreizung von elektromagnetischen Störungen im Frequenzspektrum bewirkt. Ausserdem kann die PWM-Frequenz abhängig von der Drehzahl und/oder Last, bzw. Ein-/Ausschaltdauer variiert werden, um die Erfassung der Nulldurchgänge sowie die Signalmessung zu verbessern.

Weitere Vorteile, Merkmale und Einzelheiten der Erfindung werden anhand der Figurenbeschreibung ersichtlich.

Es zeigen:

Fig. 1:     zwei unterschiedliche Schaltungen eines passiven Leistungsfaktorkorrekturfilters mit einer vorgeschalteten Drossel,

Fig. 2:     ein aktives Leistungsfaktorkorrekturfilter als Hochsetzsteller,

Fig. 3:     ein brückenloses Leistungsfaktorkorrekturfilter mit einer Inverter-Endstufe,

Fig. 4:     ein halb-brückenloses PFC,

Fig. 5: ein passives PFC mit im Gegentakt gekoppelten Drosseln,

Figur 6: ein Schaltbild der Leistungsendstufe des Inverters zur Erläuterung der Messmethode für die Messung der Zwischenkreisspannung,

Figur 7: eine skizzierte Darstellung der Zeitslots für die Stromregelung sowie zusätzliche Nulldurchgangserkennung

Da die in Fig. 1 und Fig. 2 gezeigten Schaltungen aus dem Stand der Technik bekannte Leistungsfaktorkorrekturfilter sind, wird von einer detaillierten Beschreibung der Funktionsweise dieser nichterfindungsgegenständlichen Schaltungen abgesehen.

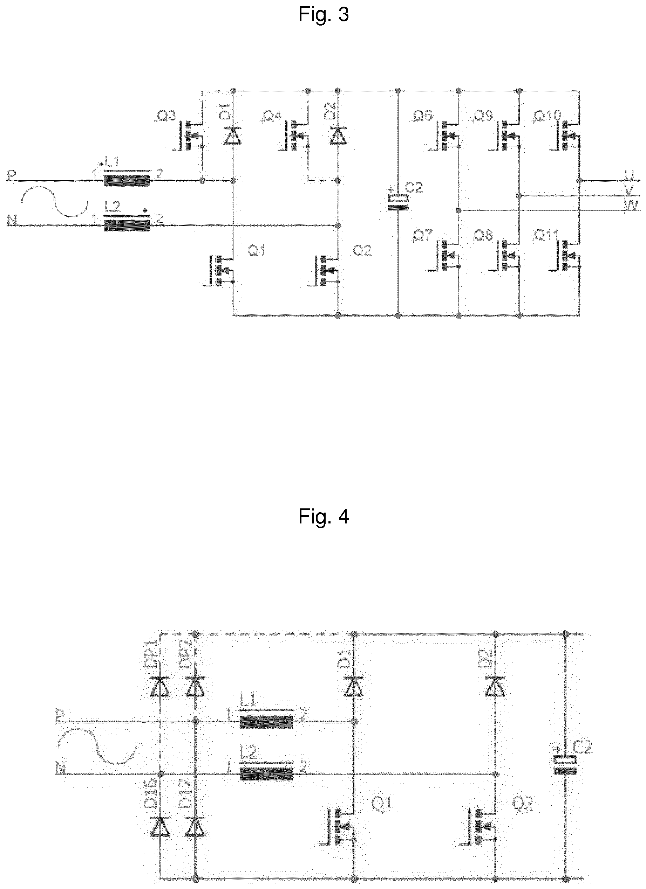

Fig. 3 zeigt ein brückenloses Leistungsfaktorkorrekturfilter mit einer Inverter-Endstufe, bei der die gestrichelt angebundenen Bauteile Q3 und Q4 anstatt der Dioden D1 und D2 eingesetzt werden können.

Das Funktionsprinzip einer in "bridgeless PFC", also eines brückenlosen Leistungsfaktorkorrekturfilters wird im nachfolgenden kurz beschrieben.

Für den Fall, dass P > N ist, gilt: Q1 choppt, um den sinusförmigen Netzstrom aufzubauen. Q2 ist kontinuierlich eingeschaltet.

Für den Fall, dass N > P ist, gilt: Q2 choppt, um den sinusförmigen Netzstrom aufzubauen. Q1 ist kontinuierlich eingeschaltet.

Gegenüber des in Fig. 2 dargestellten aktiven Leistungsfaktorkorrekturfilters erzielt die in Fig. 3 dargestellte brückenlose PFC einen um circa einen Prozent höheren Wirkungsgrad. Dies ist auf eine Kombination der Gleichrichtung und des Leistungskorrekturfaktors in einer Stufe zurückzuführen.

Durch die Verwendung des Leistungsfaktorkorrekturfilters nach Fig. 3 erschließen sich einige Vorteile. So ist bei Verwendung des gleichen Transistortyps für Q1/Q2 für die Endstufe Q6 bis Q11 eine Reduzierung der Diversität der Bauteile sowie der damit in Verbindung stehenden Kosten möglich.

Weiter kann anstelle der Verwendung der Dioden D1 und D2 mithilfe von die Dioden ersetzenden Transistoren Q3/Q4 eine Vollbrücke aufgebaut werden, die dem Wirkungsgrad der Gleichrichtung steigert. Hierbei sind jedoch die zusätzlichen Kosten für die Treiber und die Transistoren abzuwägen.

Weiter kann vorgesehen sein, dass die PFC-Drosseln L1, L2 im Gegentakt gekoppelt sind. Dadurch lässt sich eine vierfache Steigerung der Induktivität erzielen, denn es gilt:

$$L_{Gesamt} = L1 + L2 + 2\sqrt{L1 \cdot L2} = 4L, \text{ wobei } L1 = L2 = L.$$

Außerdem entsteht damit ein Gegentaktfilter in Serie zu dem vorgeschalteten EMV-Filter. Weiter vorteilhaft ist, dass ein NTC-Schaltwiderstand entfallen kann, da bei geeigneter Auslegung die PFC-Drossel den Ladestrom des Zwischenkreises begrenzt.

In Bezug auf die Restspannung ist von Vorteil, dass der eingangsseitig platzierte Entstörkondensator, der sogenannte X-Kondensator entladen werden kann, ohne auf spezielle ICs oder hochohmige Eingangsbeschaltung zurückgreifen zu müssen.

Auch ist möglich, dass aufgrund der prinzipiell bedingten Hochsetzstellerfunktion des Leistungsfaktorkorrekturfilters bei geeigneter Auslegung ein Betrieb sowohl am 110-V-Netz, als auch am 220-V-Netz möglich ist, ohne dass dabei ein Tausch des Kompressors erforderlich ist.

Weiter ist mit der erfindungsgemäßen Schaltung möglich, den eingangsseitig eine kapazitive Blindlast darstellenden X-Kondensator mithilfe des aktiven Leistungsfaktorkorrekturfilters zu kompensieren.

Zudem sorgt das zentrale Leistungsfaktorkorrekturfilter für die Versorgung des Inverters und der Geräteelektronik, was zu einer Verminderung der Kosten führt und gleichzeitig das gesamte Gerät und nicht nur den Inverter EMV-konform macht.

Wie bei einem klassischen aktiven Leistungsfaktorkorrekturfilter kann bei einer geringen Last die Ansteuerung unterbleiben, so dass automatisch die Funktionalitäten eines passiven Leistungsfaktorkorrekturfilters erreicht werden.

Zudem ist von der Erfindungsidee auch das Funktionsprinzip einer "semibridgeless-PFC" umfasst.

Fig. 4 zeigt eine solche Anordnung. Vom Funktionsprinzip her ist die "semibridgeless-PFC" identisch mit der Bridgeless-Version. Die Dioden D16/D17 verbinden das GND-Potential des Inverters je nach Halbwelle mit dem aktuell niedrigeren Potential des Netzes, was zu einer Reduktion der Common Mode-Spannung führt und das EMV-Störverhalten verbessert. Die optionalen Dioden DP1/DP2 dienen zur Vorladung des Zwischenkreises und bilden somit im Einschaltaugenblick einen Bypass. Dadurch werden die Drosseln L1/L2 nicht mit einem hohem Strom beansprucht.

Die Bypass-Dioden können auch bei den anderen vorgestellten PFC-Topologien eingesetzt werden.

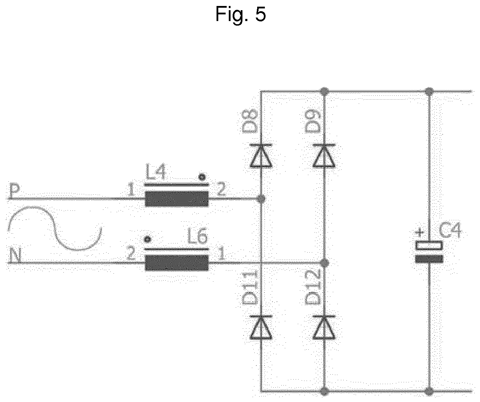

Fig. 5 zeigt eine passive PFC, die eine zusätzliche im Gegentakt gekoppelte Drossel aufweist. Die Drosseln können dabei AC- oder DC-seitig angebracht werden.

Weitere Maßnahmen zur Reduzierung des Energieverbrauchs des verbauten Inverter und zur Verringerung elektromagnetischer Störungen sollen nachfolgen genauer beschrieben werden.

Indirekte Messung der Zwischenkreisspannung

Die Messung der Zwischenkreisspannung ist bei Invertern in der Regel aus folgenden Gründen gegeben:

- Sicherheit: Überwachung auf Über-/Unterspannung
- Motorregelung: Anpassung des Dutycycles, Referenzwert für Nulldurchgangserkennung
- PFC-Regelung: Ist-Wert der eingestellten Spannung

Die Zwischenkreisspannung wird wie jede andere hohe Spannung über einen Spannungsteiler heruntergebrochen und dem Controller zugeführt. Bei Invertern, die bei kleiner Spannung betrieben werden oder in einem großen Leistungsbereich liegen, sind die Verluste im Spannungsteiler vernachlässigbar. In Kühlschränken können sogar marginale Verbraucher wie Spannungsteiler einen hohen Stellenwert gewinnen.

Bei einem Inverter, der am 115V-Netz betrieben wird und einen Gleichrichter einsetzt, beträgt die Zwischenkreisspannung ca. 160V. Nimmt man einen relativ hochohmigen Spannungsteiler von $2M\Omega$, so betragen die Verluste durchgehend ca. 6mW. Das ist wenig und vernachlässigbar. Bei demselben Spannungsteiler betragen die Verluste bei Betrieb am 230V-Netz ca. 50mW. Dies kann für Geräte mit einem hohen Effizienzgrad einen recht beachtlichen Verbrauch darstellen. Vor allem ist störend, dass der Spannungsteiler, ob die Messung notwendig ist oder nicht, stets am Zwischenkreis fest angeschlossen ist und ständig Verluste produziert.

Eine Möglichkeit diese Verluste zu reduzieren besteht sicherlich darin, den Spannungsteiler hochohmiger zu machen. Allerdings führen hohe Widerstände zu einer Zunahme von Leckageströmen und die Messgenauigkeit sinkt. Ein abschaltbarer Spannungsteiler ist mit zusätzlichen Kosten und Aufwand verbunden.

Idealerweise sollte es möglich sein, den Spannungsteiler komplett zu eliminieren. Schaut man sich einen Inverter an, der z.B. für einen sensorlosen Blockbetrieb eines Motors ausgelegt ist, so findet man die Messung der Phasenspannungen vor. Im einfachsten Fall werden dort Spannungsteiler eingesetzt, die an der Anschlussstelle der Wicklung zwischen einem High- und Low-Side-Transistor angebunden sind. Diese dienen der Erfassung der Rotorlage, indem der Nulldurchgang der induzierten Spannung in der nicht bestromten Motorwicklung erkannt wird. Die andere(n) Motorwicklung(en) ist/sind bestromt und wird/werden entsprechend der PWM-Modulation an die Zwischenkreisspannung (High-side) bzw. Masse (low-side) geschaltet. Ist ein High-side-Transistor durchgeschaltet, so kann der Controller die Zwischenkreisspannung abgreifen und messen.

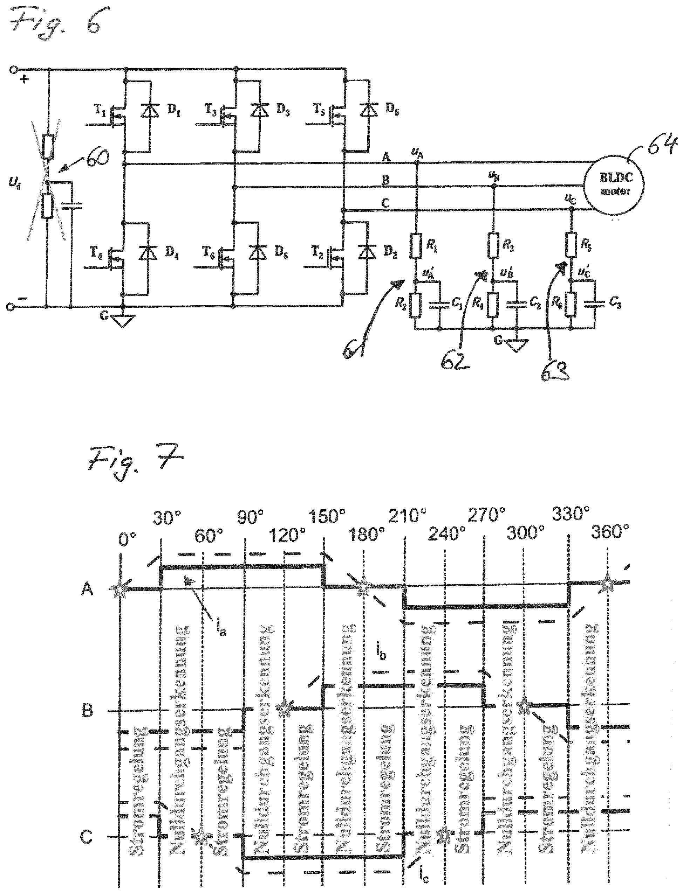

Ein Beispiel hierfür findet sich in Figur 6. Dort ist der sonst übliche Spannungsteiler 60 durchgestrichen, die Zwischenkreisspannung $U_d$ wird stattdessen mittels der Spannungsteiler 61, 62, 63 abgegriffen. Diese neuartige Messmethode erfordert keine Änderungen in der Hardware, sondern nur eine passende Konfiguration des AD-Wandlers in der Software zum Abtasten der Phasenspannung bei aktivem High-side-Transistor. Die Messung führt also zu keinen zusätzlichen Verlusten. Da die Abtastung von Motorsignalen auf die PWM-Frequenz abgestimmt ist, führt die vorgestellte Methode zu keinen Einbußen in der Abtastfrequenz. Auch Sicherheitsaspekte lassen sich abdecken, denn das Messen in allen Motorphasen und eine intelligente Auswertung liefern ein Indiz dafür, ob die Transistoren und die Spannungsteiler 61, 62, 63 intakt sind. Sollte die Zwischenkreisspannung $U_d$ auch im Stillstand des Motors 64 bekannt sein, so kann ein High-sideTransistor ohne weiteres eingeschaltet werden. Der Spannungsabfall über einem Transistor liegt im Bereich von mehreren Volt, was bei 320V Nennspannung maximal 1 % Abweichung darstellt. Dieser Fehler kann sehr leicht mit einer Konstanten oder abhängig vom gemessenen Strom kompensiert werden.

Variation der Schaltfrequenz

Moderne Inverter haben in den meisten Fällen eine digital angesteuerte Leistungsendstufe, die mit pulsweitenmodulierter (PWM) Ansteuerung der Transistoren die Motorphasen bestromt. Die gesamte Motorregelung wird auf die PWM-Frequenz abgestimmt. Die Wahl der PWM-Frequenz ist oft ein Kompromiss zwischen Faktoren wie: Performance der Regelkreise, Schaltverlusten der Endstufe, EMV, Rechenleistung des Controllers, Erfassung der Rotorlage bei sensorlos geregelten Motoren.

Befinden sich Motoren im sensorlosen Blockbetrieb, so wird die Rotorlage anhand der Nulldurchgänge der nicht bestromten Phasenspannung erkannt. Die Erkennung des Nulldurchgangs wird nach jeder Kommutierung aktiv. Sobald der Nulldurchgang detektiert ist, schaltet die Regelung diesen Task bis zur nächsten Kommutierung ab. Die Nulldurchgangserkennung ist auf die PWM-Frequenz abgestimmt, weil das Schaltmuster der aktiven Phasen die Spannung in der nicht bestromten Phase beeinflusst. Je höher die PWM-Frequenz ist, desto genauer wird der Nulldurchgang erkannt. Da aber das Messsignal eine natürliche Einschwingdauer hat, lässt sich die PWM-Frequenz nicht beliebig erhöhen. Somit muss die PWM-Frequenz für diesen Fall achtsam gewählt werden.

Während die Nulldurchgangserkennung ein wiederkehrender Task ist, läuft die Stromregelung permanent. Aufgrund einer relativ hohen Phaseninduktivität (> 10mH) und moderater Drehzahlen < 2000rpm, wie bei Kühlschrankkompressoren üblich, ist keine hohe PWM-Frequenz notwendig um eine zufriedenstellende Stromregelung zu erreichen. Somit lässt sich die PWM-Frequenz für die Zeit nach der Erkennung des Nulldurchgangs auf einen niedrigeren Wert reduzieren. Die Slots vor dem Nulldurchgang und danach sind theoretisch gleich und betragen jeweils 30°el. Siehe hierzu Figur 6.

Dreht der Motor mit konstanter Drehzahl, so kann man für 50% der Betriebszeit eine geringere PWM-Frequenz verwenden und somit die Schaltverluste reduzieren. Ein weiterer Vorteil besteht darin, dass die durch das Schalten der Transistoren entstehenden Störungen auf ein breiteres Frequenzspektrum gespreizt werden und das Störspektrum über die Zeit in der Amplitude abnimmt. Es ist auch denkbar ein unregelmäßiges Umschalten der PWM-Frequenz zu realisieren um Störungen auf ein noch breiteres Spektrum zu verteilen. Eine Reduzierung der Schaltverluste wirkt sich auch positiv auf die Lebensdauer der Transistoren aus.

Wie eingangs erwähnt spielt die Wahl der PWM-Frequenz eine wichtige Rolle für eine zuverlässige Erkennung der Rotorlage. Mit höherer Drehzahl wird die Zeitspanne zum Erkennen des Nulldurchgangs kürzer und die Auswertung ungenauer. Diesem Umstand kann begegnet werden, indem die PWM-Frequenz für die Dauer der Nulldurchgangserkennung angehoben wird, danach aber wieder gesenkt wird. Diese Massnahme kann nicht nur bei Drehzahl-, sondern auch Lastvariation angewandt werden.

Ist die Signalerfassung aufgrund der Einschwingzeit und aktueller Ein-/Ausschaltdauer ungenau, so führt eine Reduktion der PWM-Frequenz zu zeitlicher Vergrößerung des gewünschten Messabschnitts.

**Patentansprüche**

1. Kühl- und/oder Gefriergerät umfassend einen Motor, einen Kompressor und eine zugehörige Kompressorsteuerung, **dadurch gekennzeichnet, dass** die Kompressorsteuerung durch einen Inverter gebildet ist.

2. Kühl- und/oder Gefriergerät nach Anspruch 1, **dadurch gekennzeichnet, dass** der Inverter ein aktives Leistungsfaktorkorrekturfilter aufweist, das vorzugsweise mit Gegentaktspulen versehen ist.

3. Kühl- und/oder Gefriergerät nach Anspruch 2, **dadurch gekennzeichnet, dass** das aktive Leistungsfaktorkorrekturfilter über eine eigene und/oder eine integrierte Ansteuerung verfügt.

4. Kühl- und/oder Gefriergerät nach Anspruch 2 oder 3, **dadurch gekennzeichnet, dass** das aktive Leistungsfaktorkorrekturfilter über eine steuerbare Vollbrücke verfügt.

5. Kühl- und/oder Gefriergerät nach einem der vorhergehenden Ansprüche, **dadurch gekennzeichnet, dass** der Inverter ein brückenfreies Leistungsfaktorkorrekturfilter oder ein halbbrückenfreies Leistungsfaktorkorrekturfilter besitzt, das vorzugsweise mit einer Inverter-Endstufe versehen ist.

6. Kühl- und/oder Gefriergerät nach einem der vorhergehenden Ansprüche, **dadurch gekennzeichnet, dass** in dem Inverter für Transistoren desselben Typs, insbesondere für die Transistoren des Leistungsfaktorkorrekturfilters und/oder der Inverter-Endstufe baugleiche Transistoren verwendet werden.

7. Kühl- und/oder Gefriergerät nach einem der vorhergehenden Ansprüche, **dadurch gekennzeichnet, dass** zum Steigern des Wirkungsgrads der Gleichrichtung eine Vollbrücke vorgesehen ist.

8. Kühl- und/oder Gefriergerät nach einem der vorhergehenden Ansprüche, **dadurch gekennzeichnet, dass** die Drosseln des Leistungsfaktorkorrekturfilters im Gegentakt gekoppelt sind, um eine Steigerung der Induktivität zu erzielen, und/oder die Drosseln AC- oder DC-seitig angebracht sind.

9. Kühl- und/oder Gefriergerät nach einem der vorhergehenden Ansprüche, **dadurch gekennzeichnet, dass** die Drossel des Leistungsfaktorkorrekturfilters den Ladestrom des Zwischenkreises des Leistungsfaktorkorrekturfilters begrenzt und/oder **dadurch gekennzeichnet, dass** der Leistungsfaktorkorrekturfilter einen Entstörkondensator, insbesondere einen X-Kondensator, aufweist.

10. Kühl- und/oder Gefriergerät nach Anspruch 9, **dadurch gekennzeichnet, dass** der Entstörkondensator so in dem Leistungsfaktorkorrekturfilter angeordnet ist, dass ein Entladen des Kondensators ohne Rückgriff auf spezielle ICs oder eine hochohmige Eingangsbeschaltung erfolgen kann.

11. Kühl- und/oder Gefriergerät nach einem der vorhergehenden Ansprüche 9 oder 10, **dadurch gekennzeichnet, dass** der Entstörkondensator eine kapazitive Blindlast darstellt, die durch das aktive Leistungsfaktorkorrekturfilter kompensierbar ist.

12. Kühl- und/oder Gefriergerät nach einem der vorhergehenden Ansprüche, **dadurch gekennzeichnet, dass** das Leistungsfaktorkorrekturfilter einen Betrieb des Kompressors sowohl bei einem 110V-Netz als auch bei einem 220V-Netz zulässt und/oder **dadurch gekennzeichnet, dass** die Versorgung des Inverters und einer Geräteelektronik über das Leistungsfaktorkorrekturfilter erfolgt.

13. Kühl- und/oder Gefriergerät nach einem der vorhergehenden Ansprüche, **dadurch gekennzeichnet, dass** die Funktionalität eines passiven Leistungsfaktorkorrekturfilters durch Ausbleiben der Ansteuerung des aktiven Leistungsfaktorkorrekturfilters erzeugbar ist und/oder **dadurch gekennzeichnet, dass** zwischen wenigstens einem Messmittel zur Messung der Zwischenkreisspannung und den Anschlussstellen des Zwischenkreises keine dauerhafte elektrische Verbindung besteht.

14. Kühl- und/oder Gefriergerät nach Anspruch 13, **dadurch gekennzeichnet, dass** zur Messung der Zwischenkreisspannung Messmittel zur Ermittlung der Phasenspannung eines sensorlosen Kompressormotors dienen, wobei idealerweise die für jede Motorphase vorgesehenen Spannungsteiler zur Messung der Zwischenkreisspannung dienen.

15. Kühl- und/oder Gefriergerät nach einem der vorhergehenden Ansprüche, **dadurch gekennzeichnet, dass** die Schaltfrequenz der Leistungsendstufe des Inverters, insbesondere die PWM-Frequenz variabel ist und in Abhängigkeit wenigstens eines Parameters ansteuerbar ist, wobei vorzugsweise vorgesehen ist, dass die Schaltfrequenz in Abhängigkeit der Kompressordrehzahl und/oder der Rotorlage des Kompressors und/oder der Kompressorlast und/oder der Ein-/Ausschaltdauer der Schaltelemente der Leistungsendstufe einstellbar ist.

Fig. 1

Fig. 2

Fig. 3

Fig. 4

Fig. 5

Fig. 6

Fig. 7

Europäisches Patentamt
European Patent Office
Office européen des brevets

## EUROPÄISCHER TEILRECHERCHENBERICHT

nach Regel 62a und/oder 63 des Europäischen Patentübereinkommens. Dieser Bericht gilt für das weitere Verfahren als europäischer Recherchenbericht.

**Nummer der Anmeldung**

EP 17 20 1422

### EINSCHLÄGIGE DOKUMENTE

| Kategorie | Kennzeichnung des Dokuments mit Angabe, soweit erforderlich der maßgeblichen Teile | Betrifft Anspruch | KLASSIFIKATION DER ANMELDUNG (IPC) |
|---|---|---|---|
| X | EP 2 999 104 A1 (REGAL BELOIT AMERICA INC [US]) 23. März 2016 (2016-03-23) | 2,3,5,6, 8-12 | INV. F25D29/00 |
| Y | * Absatz [0012] - Absatz [0022]; Abbildungen 3,10,11 * | 4,7, 13-15 | F25B49/02 H02M1/42 H02M7/219 |
| | ----- | | H02M7/5387 |
| Y | US 2011/031911 A1 (MARCINKIEWICZ JOSEPH G [US] ET AL) 10. Februar 2011 (2011-02-10) * Absatz [0093] * | 4,7,15 | |
| | ----- | | |
| Y | DE 10 2015 108910 A1 (RITTAL GMBH & CO KG [DE]) 10. Dezember 2015 (2015-12-10) * Absatz [0020] - Absatz [0021] * | 13,14 | |
| | ----- | | |
| X | WO 2016/033478 A1 (EMERSON CLIMATE TECHNOLOGIES [US]) 3. März 2016 (2016-03-03) * Absatz [0013] - Absatz [0015] * | 2,3,6 | |
| | ----- | | |
| X | US 6 181 539 B1 (MAEJIMA AKIHIRO [JP] ET AL) 30. Januar 2001 (2001-01-30) * Abbildung 14a * | 2,3,8 | |
| | ----- | | |
| | -/-- | | |

**RECHERCHIERTE SACHGEBIETE (IPC)**

F25D
F25B
H02M

### UNVOLLSTÄNDIGE RECHERCHE

Die Recherchenabteilung ist der Auffassung, daß ein oder mehrere Ansprüche, den Vorschriften des EPÜ nicht entspricht bzw. entsprechen, so daß nur eine Teilrecherche (R.62a, 63) durchgeführt wurde.

Vollständig recherchierte Patentansprüche:

Unvollständig recherchierte Patentansprüche:

Nicht recherchierte Patentansprüche:

Grund für die Beschränkung der Recherche:

Siehe Ergänzungsblatt C

| Recherchenort | Abschlußdatum der Recherche | Prüfer |
|---|---|---|
| Den Haag | 20. Juni 2018 | Kuljis, Bruno |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04E09)

Europäisches
Patentamt

European
Patent Office

Office européen
des brevets

**EUROPÄISCHER
TEILRECHERCHENBERICHT**

| | **EINSCHLÄGIGE DOKUMENTE** | | **KLASSIFIKATION DER ANMELDUNG (IPC)** |
|---|---|---|---|
| Kategorie | Kennzeichnung des Dokuments mit Angabe, soweit erforderlich der maßgeblichen Teile | Betrifft Anspruch | |
| X | WO 2016/047019 A1 (DAIKIN IND LTD [JP]) 31. März 2016 (2016-03-31) * Absatz [0033] - Absatz [0035]; Abbildung 1 * ----- | 2,3 | |
| | | | **RECHERCHIERTE SACHGEBIETE (IPC)** |

EPO FORM 1503 03.82 (P04C12)

**UNVOLLSTÄNDIGE RECHERCHE
ERGÄNZUNGSBLATT C**

Nummer der Anmeldung

EP 17 20 1422

Vollständig recherchierbare Ansprüche:
2-15

Nicht recherchierte Ansprüche:
1

Grund für die Beschränkung der Recherche:

Der vorliegende Anspruch 1 bezieht sich auf eine extrem große Zahl möglicher Vorrichtungen. Stützung und Offenbarung im Sinne der Artikel 84 und 83 EPÜ lassen sich jedoch nur für einen sehr kleinen Teil der beanspruchten Vorrichtungen finden, siehe Abbildungen 3-5.
Die Verletzung der einschlägigen Erfordernisse ist so schwerwiegend, dass eine sinnvolle Recherche für den beanspruchten Gegenstand als Ganzes nicht durchgeführt werden konnte (Regel 63 EPÜ und Richtlinien B-VIII, 3).
Gemäß Regel 63 (2) EPÜ wurde der Recherchenbericht deshalb auf der Grundlage des Anspruchs 2 erstellt, der eine vernünftige Definition der Erfindung, für die Schutz begehrt wird, zu umfassen scheint.

**ANHANG ZUM EUROPÄISCHEN RECHERCHENBERICHT**
**ÜBER DIE EUROPÄISCHE PATENTANMELDUNG NR.**   EP 17 20 1422

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

20-06-2018

| Im Recherchenbericht angeführtes Patentdokument | Datum der Veröffentlichung | Mitglied(er) der Patentfamilie | Datum der Veröffentlichung |
|---|---|---|---|
| EP 2999104 A1 | 23-03-2016 | EP 2999104 A1<br>US 2016079888 A1 | 23-03-2016<br>17-03-2016 |
| US 2011031911 A1 | 10-02-2011 | AU 2010282629 A1<br>CN 102549901 A<br>EP 2465188 A2<br>KR 20120040739 A<br>RU 2012105436 A<br>US 2011031911 A1<br>US 2014152209 A1<br>US 2015365034 A1<br>WO 2011019701 A2 | 23-02-2012<br>04-07-2012<br>20-06-2012<br>27-04-2012<br>20-09-2013<br>10-02-2011<br>05-06-2014<br>17-12-2015<br>17-02-2011 |
| DE 102015108910 A1 | 10-12-2015 | CA 2944371 A1<br>CN 106463923 A<br>DE 102015108910 A1<br>EP 3152989 A1<br>ES 2665955 T3<br>JP 2017517234 A<br>KR 20170015283 A<br>US 2017202109 A1<br>WO 2015185040 A1 | 10-12-2015<br>22-02-2017<br>10-12-2015<br>12-04-2017<br>30-04-2018<br>22-06-2017<br>08-02-2017<br>13-07-2017<br>10-12-2015 |
| WO 2016033478 A1 | 03-03-2016 | CN 106796070 A<br>EP 3186101 A1<br>US 2016061504 A1<br>WO 2016033478 A1 | 31-05-2017<br>05-07-2017<br>03-03-2016<br>03-03-2016 |
| US 6181539 B1 | 30-01-2001 | BR 9806219 A<br>CN 1241317 A<br>DE 69820216 D1<br>DE 69820216 T2<br>EP 0940001 A1<br>ES 2212334 T3<br>JP 4343993 B2<br>JP 2008259422 A<br>KR 20000069099 A<br>RU 2175462 C2<br>TW 364049 B<br>US 6181539 B1<br>WO 9916164 A1 | 18-04-2000<br>12-01-2000<br>15-01-2004<br>14-10-2004<br>08-09-1999<br>16-07-2004<br>14-10-2009<br>23-10-2008<br>25-11-2000<br>27-10-2001<br>11-07-1999<br>30-01-2001<br>01-04-1999 |
| WO 2016047019 A1 | 31-03-2016 | CN 107078657 A<br>EP 3176940 A1<br>JP 5850116 B1<br>JP 2016073025 A | 18-08-2017<br>07-06-2017<br>03-02-2016<br>09-05-2016 |

EPO FORM P0461

Für nähere Einzelheiten zu diesem Anhang : siehe Amtsblatt des Europäischen Patentamts, Nr.12/82

Seite 1 von 2

**ANHANG ZUM EUROPÄISCHEN RECHERCHENBERICHT**
**ÜBER DIE EUROPÄISCHE PATENTANMELDUNG NR.**

EP 17 20 1422

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

20-06-2018

| Im Recherchenbericht angeführtes Patentdokument | Datum der Veröffentlichung | Mitglied(er) der Patentfamilie | | Datum der Veröffentlichung |
|---|---|---|---|---|
| | | US | 2017288567 A1 | 05-10-2017 |
| | | WO | 2016047019 A1 | 31-03-2016 |

Für nähere Einzelheiten zu diesem Anhang : siehe Amtsblatt des Europäischen Patentamts, Nr.12/82

Seite 2 von 2